# EUROPEAN PATENT APPLICATION

(11) **EP 4 417 584 A1**
(43) Date of publication of application: **21.08.2024**
(21) Application number: 23181489.8
(22) Date of filing: 26.06.2023
(51) Int. Cl.: C03B 37/025, C03B 37/027, C03B 37/029

(54) **METHOD FOR DRAWING AN OPTICAL FIBER**

(30) Priority: 20.02.2023 IN 202311011516
(71) Applicant: Sterlite Technologies Limited, Gurugram, Haryana 122102 (IN)
(72) Inventor: Balakrishnan, Ranjith, 122102 Gurugram, Haryana (IN); Kavanal, Rano Roy, 122102 Gurugram, Haryana (IN); Pawale, Anant, 122102 Gurugram, Haryana (IN); Raut, Rajendra, 122102 Gurugram, Haryana (IN); Munige, Srinivas Reddy, 122102 Gurugram, Haryana (IN); Pandey, Anand K, 122102 Gurugram, Haryana (IN)
(74) Representative: Petraz, Gilberto Luigi

(57) **Abstract**

The present disclosure relates to a method (200, 400, 500, 600) for drawing a bare optical fiber (118) from a cylindrical glass preform (102). It includes injecting first and second inert gasses inside the furnace chamber (104) in a predefined ratio of 0.3 to 5, and melting the cylindrical glass preform (102) while maintaining a positive pressure in the furnace chamber (104) to form the bare optical fiber (118) such that a short term Bare Fiber Diameter (BFD) variation of the bare optical fiber (118) is less than 0.1 micrometers (µm) from a mean diameter of the bare optical fiber (118). Long term variations of BFD are controlled via small adjustments of feed speed of less than 0.3 mm per minute.

## Description

### TECHNICAL FIELD

Embodiments of the present disclosure relate to the field of optical fiber communications, and more particularly to a method for drawing an optical fiber that has tight tolerances for long-term diameter variation and short-term diameter variation of the optical fiber.

This application claims the benefit of Indian Application No. 202311011516 titled "APPARATUS, SYSTEM, AND METHOD FOR DRAWING AN OPTICAL FIBER" filed by the applicant on February 20, 2023, which is incorporated herein by reference in its entirety.

### BACKGROUND ART

Inert gasses are commonly used in the process of drawing an optical fiber. In this process, a preform having a core and cladding materials is heated in a furnace and then drawn into a long, thin optical fiber. During the drawing process, the preform is heated to a high temperature so that it softens and can be drawn into an optical fiber. However, the high temperature can also cause unwanted chemical reactions and impurities in the glass material. To prevent this, one or more inert gases are used. A few inert gases with low atomic number can be more buoyant and easier to handle, while being expensive. Other inert gases may be less buoyant but cheaper for large scale commercial production. The choice of which gas to use may depend on factors such as cost, availability, and the specific requirements of the manufacturing process.

Prior art reference US20010047667A1 discloses a fiber drawing method that maintains a constant diameter of the optical fiber even in the presence of preform irregularities by adjusting the flow rate of Argon and Helium near the heated part of the preform.

Another prior art reference US7197898B2 discloses a diameter-controlled optical fiber drawing process that maintains a constant diameter of the optical fiber by measuring the diameter of the uncoated fiber and the preform before melting and adjusting the drawing speed and preform feed speed accordingly.

Yet another prior art reference CN105271706B discloses a fiber drawing equipment that uses high-pressure argon gas to replace high-cost helium inside the furnace, reducing fiber diameter variation.

Yet another prior art reference US5073179A discloses a drawing process for producing an optical fiber from a preform and controlling fiber diameter during the drawing process by measuring the diameter of the uncoated fiber and adjusting drawing rate and temperature accordingly.

The prior art references fall short of effectively addressing the problem of long-term diameter variation and short-term diameter variation of the optical fiber. Thus, there is a need for a technology that overcomes the above stated disadvantages of conventional methods. Hence, the present disclosure provides a method to reduce a short-term Bare Fiber Diameter (BFD) variation of a bare optical fiber during optical fiber drawing process.

### SUMMARY OF THE DISCLOSURE

According to the first aspect of the present disclosure, the method for drawing a bare optical fiber from a cylindrical glass preform in a furnace chamber comprising melting the cylindrical glass preform in presence of a first inert gas and a second inert gas inside the furnace chamber to draw the bare optical fiber such that the first inert gas and the second inert gas are in a predefined ratio and cooling the bare optical fiber, wherein a short-term Bare Fiber Diameter (BFD) variation of the bare optical fiber is less than 0.1 micrometers (µm) from a mean diameter of the bare optical fiber. In particular, the first inert gas is defined by a first atomic number and the second inert gas is defined by a second atomic number. Moreover, the second atomic number is at least 5 times the first atomic number. Further, the predefined ratio of volume of the first inert gas and the second inert gas is in a range of 0.3 to 5.

In accordance with an embodiment of the present disclosure, inserting the cylindrical glass preform in the furnace chamber at a predefined feed speed. In particular, a deviation from a mean value of the predefined feed speed is less than 0.3 Millimetre Per Minute (mmpm) for maintaining the mean diameter of the bare optical fiber at a predefined diameter thereby controlling a long-term diameter variation of the bare optical fiber.

In accordance with an embodiment of the present disclosure, the method further comprising steps of measuring the BFD of the bare optical fiber and a capstan speed of a capstan that pulls the bare optical fiber from the cylindrical glass preform and adjusting the capstan speed based on the measured BFD.

In accordance with an embodiment of the present disclosure, the method adjusts the predefined feed speed based on a capstan speed in one or more steps such that each step is less than 0.3 mmpm.

According to the second aspect of the present disclosure, a method for drawing a bare optical fiber from a cylindrical glass preform in a furnace chamber comprising steps of inserting the cylindrical glass preform in the furnace chamber at a predefined feed speed, adjusting the predefined feed speed based on a capstan speed in one or more steps such that each step is less than 0.3 mmpm, melting the cylindrical glass preform in presence of a first inert gas and a second inert gas inside the furnace chamber to draw the bare optical fiber and cooling the bare optical fiber. In particular, a mean diameter of the bare optical fiber is maintained at a predefined diameter.

According to the third aspect of the present disclosure, the method includes the first inert gas and the second inert gas in a predefined ratio in a range of 0.3 to 5. The Bare Fiber Diameter (BFD) variation of the bare optical fiber is less than 0.1 micrometers (µm) from the mean diameter of the bare optical fiber.

In accordance with an embodiment of the present disclosure, the method includes steps of measuring the BFD of the bare optical fiber and the capstan speed of a capstan that pulls the bare optical fiber from the cylindrical glass preform and
adjusting the capstan speed based on the measured BFD.

According to the fourth aspect of the present disclosure, an optical fiber manufactured using any of the methods such that the bare optical fiber has a BFD of the predefined diameter with a tolerance of 0.1 microns.

In accordance with an embodiment of the present disclosure, the method includes a constant total volume of the first inert gas and the second inert gas is maintained in the furnace chamber (104). The constant total volume of the first and second inert gasses is less than 17 Standard liters per second per cubic metre. Moreover, the constant total volume is the sum of the volume of the first inert gas and the second inert gas.

According to the fifth aspect of the present disclosure, the first atomic number is 2 and the second atomic number is 18. And, the attenuation of the optical fiber (152) is less than 0.324 Decibels (dB) at a wavelength of 1310 nanometres (nm).

These and other aspects herein will be better appreciated and understood when considered in conjunction with the following description and the accompanying drawings. It should be understood, however, that the following descriptions are given by way of illustration and not of limitation. Many changes and modifications may be made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating a cross-sectional view of an apparatus in accordance with an embodiment of the present disclosure;
Fig. 1B is a block diagram illustrating a system in accordance with an embodiment of the present disclosure;
Fig. 2 is a flowchart illustrating an optical fiber drawing process in presence of a first inert gas and a second inert gas in accordance with an embodiment of the present disclosure;
Fig. 3A is a graphical representation illustrating a short-term variation and a long-term variation of a Bare Fiber Diameter (BFD) of a bare optical fiber in accordance with an embodiment of the present disclosure;
Fig. 3B is a graphical representation illustrating the long-term variation of the BFD of the bare optical fiber in accordance with an embodiment of the present disclosure;
Fig.3C is a graphical representation illustrating the short-term variation of the BFD of the bare optical fiber in accordance with an embodiment of the present disclosure;
Fig. 4 is a flowchart illustrating a process of drawing a bare optical fiber during the short-term variation of the BFD in accordance with an embodiment of the present disclosure;
Fig. 5 is a flowchart illustrating a process of drawing a bare optical fiber during the long-term variation of the BFD in accordance with an embodiment of the present disclosure;
Fig. 6 is a flowchart illustrating a process of drawing the bare optical fiber during the short-term and long-term diameter variation of the BFD in accordance with another embodiment of the present disclosure;
Fig. 7 is a gas flow diagram illustrating injection of the first and second inert gasses inside a furnace chamber of the apparatus in accordance with an embodiment of the present disclosure.

The optical fiber illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### The following brief definition of terms shall apply throughout the present disclosure:

Term "optical fiber" is referred to as a light guiding medium that provides highspeed data transmission. The optical fiber comprises a core and a cladding. The light moving through the core of the optical fiber relies upon the principle of total internal reflection, where the core has a higher refractive index than the refractive index of the cladding of the optical fiber.

Term "bare optical fiber" as used herein is referred to as a type of optical fiber without any coating or cladding.

Term "core" of an optical fiber as used herein is referred to as the inner most cylindrical structure present in the center of the optical fiber, that is configured to guide the light rays inside the optical fiber.

Term "cladding" of an optical fiber as used herein is referred to as one or more layered structure covering the core of an optical fiber from the outside, that is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

Term "cylindrical glass preform" as used herein is referred to as a rod/solid body of glass that is melted and drawn to form an optical fiber. The cylindrical glass preform is designed to have the desired refractive index profile for the optical fiber.

Term "furnace chamber" as used herein is referred to as a high-temperature chamber used for melting the cylindrical glass preform and drawing the optical fiber. To start the drawing, the cylindrical glass preform is lowered into the furnace chamber. Generally, the drawing region is heated to about 1,900° C, where the glass softens and elongates with a teardrop-shaped drip pulling the optical fiber downward.

Term "neckdown region" as used herein referred to as a bottom point of the cylindrical glass preform which is formed after melting the cylindrical glass preform for pulling the bare optical fiber form that point.

Term "inert gas" as used herein is referred to as a gas that does not undergo chemical reactions under normal conditions. In this method, a first inert gas (such as Helium (He)) and a second inert gas (such as Argon (Ar)) are used in a predefined ratio to create an atmosphere inside the furnace chamber for the melting process. The inert gas is passed inside the furnace with a pressure slightly above atmospheric pressure with a major purpose to prevent the atmospheric air entry into the furnace chamber.

Term "predefined ratio" as used herein referred to as a specific ratio of the volume of the first inert and second inert gases (for example Helium (He) and Argon (Ar) respectively) that is chosen before the process begins. The predefined ratio in this method of the present disclosure is in the range of 0.3 to 5.

Term "short-term Bare Fiber Diameter (BFD) variation" as used herein is referred to as a measure of the tolerance level of the diameter of the bare optical fiber. The short-term BFD variation is defined as a very rapid and random occurrence of diameter variation of the bare optical fiber within small time scales. The method of the present disclosure aims to keep the BFD variation less than 0.1 micrometers (µm) from the mean diameter of the bare optical fiber to ensure consistent performance.

Term "long-term Bare Fiber Diameter (BFD) variation" as used herein is referred to as a slow variation in the diameter of the optical fiber that occurs at a periodic interval at longer time scales. The long-term BFD variation in bare optical fiber is caused by frequent and higher variation in feed speed.

Term "cooling" as used herein is referred to as a process of lowering the temperature of the bare optical fiber after it has been drawn. This is necessary to stabilize the optical fiber's structure and properties.

Term "proximal end 108a" refers to an end that is towards the furnace 104. And Term "distal end 108b" refers to an end that points away from the furnace 104.

Term "neck down region" as used herein refers to a point of the cylindrical glass preform 102 which is formed after melting the cylindrical glass preform 102 for pulling the bare optical fiber 118 form that point.

Term "short-term variation" as used herein is defined as a very rapid and random occurrence of the BFD variation within small time scales.

Term "long-term variation" as used herein is defined as a slow variation in the BFD that occurs at a periodic interval at longer time scales.

Term "capstan slope value" as used herein refers to a change in previous capstan speed and a new adjusted capstan speed.

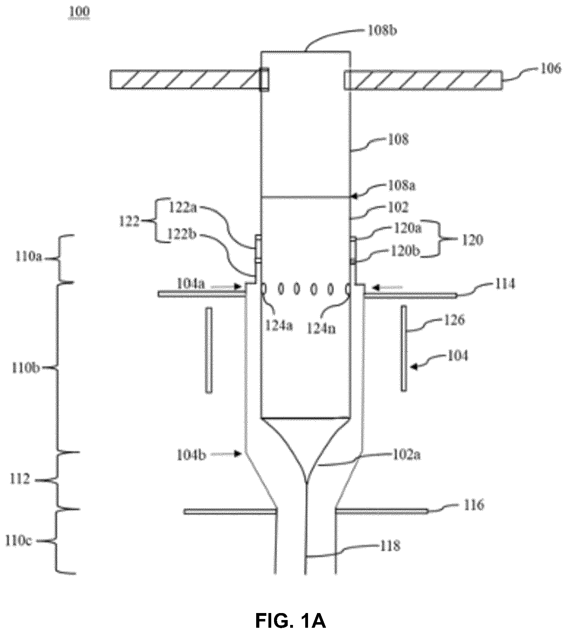

Fig. 1A is a pictorial snapshot illustrating a cross-sectional view of an apparatus in accordance with an embodiment of the present disclosure. The apparatus 100 is configured to control a Bare Fiber Diameter (BFD) variation during an optical fiber draw process. In particular, the apparatus 100 is configured to control the BFD variation within ±0.1 µm from the mean diameter of the bare optical fiber 118 while melting a cylindrical glass preform 102 in presence of first and second inert gases and by changing a feed speed by a small amount based on a change in a capstan speed to control the BFD variation.

In some aspects of the present disclosure, the cylindrical glass preform 102 is made up of very high purity (5N) chemicals that results into best quality of optical fibers. Further, the cylindrical glass preform 102 is utilized to make the optical fibers that can potentially transmit data at high speed.

In accordance with an embodiment of the present disclosure, the apparatus 100 has a furnace chamber 104, a handle holder 106, and a handle 108. Particularly, the handle 108 have a proximal end 108a and a distal end 108b such the cylindrical glass preform 102 is attached to the proximal end 108a of the handle 108. Moreover, the handle 108 is held by way of the handle holder 106. Further, the handle holder 106 is adapted to hold the handle 108 through the distal end 108b of the handle 108.

In some aspects of the present disclosure, the handle holder 106 and the handle 108 is made up of material such as, but not limited to glass, metal, and the like. Alternatively, the material for the handle holder 106 and the handle 108, may include known, related and later developed materials, without deviating from the scope of the present disclosure.

**The** furnace chamber 104 may have first end 104a and a second end 104b, a first cylindrical portion 110a, a second cylindrical portion 110b, a third cylindrical portion 110c, and a taper portion 112. In particular, the first cylindrical portion 110a and the second cylindrical portion 110b have a first diameter and a second diameter, respectively, such that the first diameter of the first cylindrical portion 110a is smaller than the second diameter of the second cylindrical portion 110b.

In accordance with an embodiment of the present disclosure, the first cylindrical portion 110a and the taper portion 112 is towards the first end 104a and the second 104b, respectively. In particular, the taper portion 112 facilitates properly directing flow of gases towards a heated portion (*i.e.,* a neck down region 102a of the cylindrical glass preform 102) during the optical fiber draw process.

The furnace chamber 104 is a hollow chamber that is adapted to accept the cylindrical glass preform 102. Further, the cylindrical glass preform 102 is inserted through the first cylindrical portion 110a into the second cylindrical portion 110b of the furnace chamber 104 from the first end 104a of the furnace chamber 104.

The furnace chamber 104 may have a top plate 114 that is disposed along a periphery of the first cylindrical portion 110a near the first end 104a of the furnace chamber 104. In particular, the top plate 114 extends outwards from an outer surface along the periphery of the first cylindrical portion 110a of the furnace chamber 104. Moreover, the furnace chamber 104 have a bottom plate 116 disposed along a periphery of the taper portion 112 near an interface of the taper portion 112 and the third cylindrical portion 110c of the furnace chamber 104. Further, the bottom plate 116 may extend outwards from an outer surface along the periphery of the taper portion 112 of the furnace chamber 104. Furthermore, the top plate 114 and the bottom plate 116 is adapted to facilitate in control of a diameter of a bare optical fiber 118 drawn from the cylindrical glass preform 102.

In accordance with an embodiment of the present disclosure, the furnace chamber 104 further have a plurality of seals 120 of which a first seal 120a and a second seal 120b are shown. Particularly, the first seal 120a and the second seal 120b is disposed along an inner surface of the first cylindrical portion 110a. Moreover, the first seal 120a and the second seal 120b is adapted to seal the cylindrical glass preform 102 within the furnace chamber 104. Further, the plurality of seals 120 may form a plurality of sealing chambers 122 of which first and second sealing chambers 122a and 122b are shown. Furthermore, the first seal 120a and the second seal 120b may form the first and second sealing chambers 122a and 122b.

In accordance with an embodiment of the present disclosure, the first sealing chamber 122a is defined between the first seal 120a and the second seal 120b. Similarly, the second sealing chamber 122b is defined between the second seal 120b and an inner space of the furnace chamber 104. The plurality of seals 120 includes two seals (*i*.*e*., the first and second seals 120a and 120b) and the plurality of sealing chambers 122 includes two sealing chambers (*i*.*e*., the first and second sealing chambers 122a and 122b), it will be apparent to a person skilled in the art that the scope of the present disclosure is not limited to it.

In accordance with an embodiment of the present disclosure, each seal and each sealing member is adapted to perform one or more operations in a manner similar to the operations of the first and second seals 120a and 120b and the first and second sealing chambers 122a and 122b, respectively. In particular, while melting the cylindrical glass preform 102 inside the furnace chamber 104, a positive pressure is maintained in the furnace chamber 104. The cylindrical glass preform 102 is melted in presence of the first inert gas and the second inert gas. Further, to maintain the positive pressure in the furnace chamber 104, a constant total volume of the first inert gas and the second inert gas is provided in the furnace chamber 104.

The constant total volume is defined as a sum of volume of the first inert gas and the second inert gas. In particular, the first inert gas is defined by a fist atomic number and the second inert gas is defined by a second atomic number, wherein the second atomic number is at least 5 times the first atomic number. Moreover, the first atomic number of first inert gas is 2 and the second atomic number of the second inert gas is 18.

In one of the non-limiting examples of the present disclosure, the first inert gas is Helium (He) and the second inert gas is Argon (Ar). In some aspects of the present disclosure, the constant total volume of the first inert gas and the second inert gas is less than 17 Standard litre per second per cubic metre. Alternatively, the constant total volume of the first inert gas and the second inert gas is in a range of 1.7 to 17 Standard liters per second per cubic metre.

In some aspects of the present disclosure, the constant total volume of the first inert gas and the second inert gas is 32 +/-17% Standard Litre Per Minute (slpm). The total volume of the first and second inert gases is maintained to the constant value to control the bare fiber diameter (BFD) variation.

In accordance with an embodiment of the present disclosure, the furnace chamber 104 may further have a plurality of inlet ports 124a-124n disposed along the periphery of the second cylindrical portion 110b near an interface of the first and second cylindrical portions 110a and 110b. Specifically, the plurality of inlet ports 124a-124n is through holes that are adapted to allow inflow gases (*e.g.,* the first and second inert gases) inside the furnace chamber 104. In particular, the diameter of each inlet port of the plurality of inlet ports 124a-124n is similar. Alternatively, a diameter associated with the plurality of inlet ports 124a-124n is different.

In accordance with an embodiment of the present disclosure, the first inert gas is defined by a first atomic number and the second inert gas is defined by a second atomic number such that the second atomic number is at least 5 times the first atomic number. In some aspects of the present disclosure, the first atomic number is 2 and the second atomic number is 18. In a non-limiting example of the present disclosure, the first and second inert gases is Helium (He) and Argon (Ar), respectively. Specifically, the first inert gas and the second inert gas inside the furnace chamber 104 may facilitate to achieve a control in variation of the BFD of the bare optical fiber 118 drawn from the cylindrical glass preform 102 within a certain band. Generally, change in flows of gases alters a bandwidth of the BFD variation. Thus, the first and second inert gases are passed inside the furnace chamber 104 with a pressure that is slightly above atmospheric pressure with a major purpose to prevent atmospheric air entry into the furnace chamber 104 to create inert atmosphere inside the furnace chamber 104 because when the inert atmosphere is not present in the furnace chamber 104, a heating element of the furnace chamber 104 that is made up of graphite (as discussed in detail later) may start generating carbon dioxide and carbon monoxide. Generally, nitrogen may also be injected as an inert gas inside the furnace chamber 104. However, kinematic viscosity of nitrogen is less than that of He and Ar, thus a tendency of forming turbulence inside the furnace chamber 104 is high while using nitrogen as compared to Helium (He) and Argon (Ar), therefore Helium (He) and Argon (Ar) is used inside the furnace chamber 104.

In accordance with an embodiment of the present disclosure, the first inert gas and the second inert gas is provided inside the furnace chamber 104 in a predefined ratio in a range of 0.3 to 5. The predefined ratio is defined as a ratio of volume of the first inert gas (*e.g.,* He) to volume of second inert gas (*e.g.,* Ar). In particular, the predefined ratio of the first and second inert gases is maintained between that range of 0.3 to 5 to avoid (i) a short-term variation in BFD of the bare optical fiber 118, (ii) a turbulent flow of the inert gases, and (iii) gases eddies formation near the neckdown region 102a of the cylindrical glass preform 102. The short-term variation in the BFD is caused by gas turbulence inside the furnace chamber 104. The short-term variation in BFD is avoided by maintaining the predefined ratio of volume of the first inert gas and the second inert gas inside the furnace chamber 104 within the predefined ratio of 0.3 to 5. Particularly, when other inert gases and/or incorrect amount of the first and second inert gases are injected inside the furnace chamber 104, the gas flows near the neck down region becomes laminar to turbulent because of diverging pathway near the neckdown region 102a of the cylindrical glass preform 102. Thus, the predefined ratio of the first inert gas and the second inert gas is maintained between 0.3 to 5 to avoid both the turbulent flow of the first inert gas and the second inert gas and formation of gases eddies near the neckdown region 102a of the cylindrical glass preform 102.

Further, the predefined ratio of the first and second inert gases is maintained between 0.3 to 5 across a length of the cylindrical glass preform 102 irrespective of any irregularity in the cylindrical glass preform 102. In particular, the predefined ratio of volume of the first and second inert gases is greater than 1. Moreover, as a quantity of the first inert gas (*e.g.,* Helium (He)) is higher than a quantity of the second inert gas (*e.g.,* Argon (Ar)), therefore a total gas flow may have to be kept as minimum to provide proper sealing (*i.e.,* to avoid leakage of gases) as well as to reduce cost of the first inert gas. To keep the total gas flow minimum, the furnace chamber 104 has the plurality of seals 120 (as discussed above) and the plurality of sealing chambers 122 (as discussed above).

In some aspects of the present disclosure, the first sealing chamber 122a is provided with an inert gas (*e.g.,* Argon (Ar), Helium (He)) to minimize the total gas flow which is sufficient to prevent entry of the atmospheric air inside the furnace chamber 104. Particularly, the first inert gas and the second inert gas is injected inside the furnace chamber 104 due to the fact that there is a large amount of graphite member in the furnace chamber 104. Moreover, the first inert gas (*i.e.,* Helium (He)) injected into the furnace chamber 104 have a density of 0.17 Kilograms/Meter³ (Kg/m³) and the second inert gas (*i.e.,* Argon (Ar)) injected into the furnace chamber 104 may have a density of 1.7 Kg/m³ such that the density of the second inert gas (*i.e.,* Argon (Ar)) is 10 times higher than the density of the first inert gas (*i.e.,* Helium (He)). Further, the first inert gas (*i.e.,* Helium (He)) injected into the furnace chamber 104 may have a kinematic viscosity of 12.35 × 10⁻⁵ Nsm/kg and the second inert gas (*i.e.,* Argon (Ar)) may have a kinematic viscosity of 1.42 * 10⁻⁵ Nsm/kg.

In accordance with an embodiment of the present disclosure, the furnace chamber 104 is a susceptor that is made up of a conductive metal material. The second cylindrical portion 110b and the taper portion 112 of the furnace chamber 104 is made up of the conductive metal material and is used to transfer heat to the cylindrical glass preform 102. Moreover, the second cylindrical portion 110b and the taper portion 112 of the furnace chamber 104 is made up of graphite. Further, the cylindrical glass preform 102 is heated by virtue of radiation provided by the heated graphite susceptor *(i.e.,* the second cylindrical portion 110b and the taper portion 112 of the furnace chamber 104).

As illustrated, the apparatus 100 further has an induction coil 126 that is coiled around the second cylindrical portion 110b and the conical section 112. Specifically, the induction coil 126 is adapted to inductively heat the second cylindrical portion 110b and the taper portion 112 of the furnace chamber 104 such that the heat is further transferred to the cylindrical glass preform 102 held within the furnace chamber 104.

In accordance with an embodiment of the present disclosure, the third cylindrical portion 110c is an extension tube that may extend from the taper portion 112. Particularly, the third cylindrical portion 110c have a third diameter that is smaller than the first and second diameters of the first and second cylindrical portions 110a and 110b, respectively.

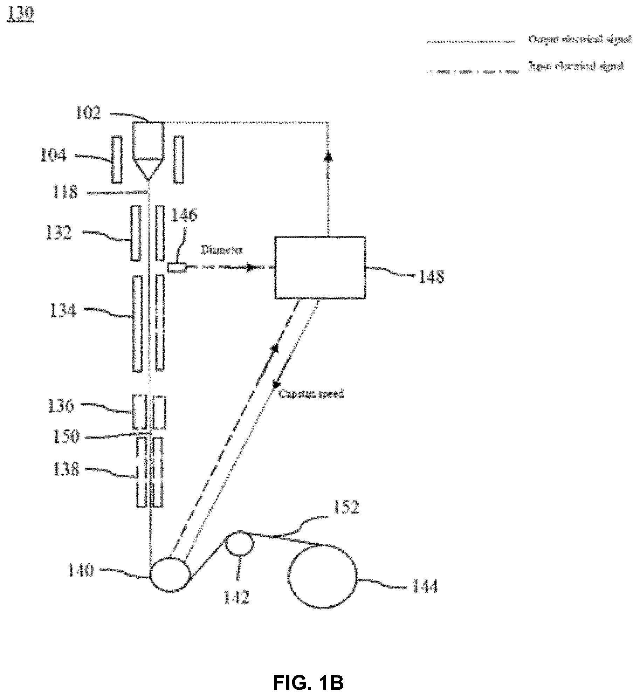

Fig. 1B is a block diagram illustrating a system in accordance with an embodiment of the present disclosure. The system 130 have the apparatus 100, an annealing furnace 132, a fiber cooling apparatus 134, a coating apparatus 136, an Ultraviolet (UC) curing apparatus 138, a capstan 140, a dancer pulley 142, a take-up spool 144, a diameter sensor 146, and a controller 148.

In accordance with an embodiment of the present disclosure, the annealing furnace 132 is adapted to receive the bare optical fiber 118 drawn from the cylindrical glass preform 102. Further, the annealing furnace 132 may facilitate to slowly cool the bare optical fiber 118 drawn from the cylindrical glass preform 102 in one or more annealing stages. Specifically, the annealing furnace 132 is adapted to lower an attenuation of the bare optical fiber 118 by lowering an effective temperature during the optical fiber draw process. Moreover, the attenuation of the optical fiber 152 is less than 0.324 Decibels (dB) at a wavelength of 1310 nanometres (nm).

Further, the fiber cooling apparatus 134 is disposed adjacent to the annealing furnace 132 such that the fiber cooling apparatus 134 receives the bare optical fiber 118 that is annealed by the annealing furnace 132. The fiber cooling apparatus 134 is configured to cool down the bare optical fiber 118 after the annealing process while the bare optical fiber 118 is being drawn through contact with one or more cooling fluid and/or air in the fiber cooling apparatus 134.

In accordance with an embodiment of the present disclosure, the coating apparatus 136 is disposed adjacent to the fiber cooling apparatus 134. In particular, the coating apparatus 136 may have one or more coating sub-systems such that the bare optical fiber 118 drawn from the cylindrical glass preform 102 passes through the one or more coating sub-systems to coat the bare optical fiber 118 with one or more primary coating materials and one or more secondary coating materials to generate a coated optical fiber 150. The one or more primary coating materials and the one or more secondary coating materials may protect a surface of very thin bare optical fiber (generally, with a cross section diameter of 125 µm) to improve strength of the bare optical fiber 118, which is excellent in terms of heat resistance, cold resistance, and demonstrates stable function over a wide temperature range. The one or more secondary coating materials is a coloured secondary coating material.

In accordance with an embodiment of the present disclosure, the UV curing apparatus 138 is disposed adjacent to the coating apparatus 136 and adapted to cure the coated optical fiber 150 using UV radiation to obtain an optical fiber 152 and further may colour code the coated optical fiber 150 to protect the optical fiber 152 against cracks and make the optical fiber 152 especially resistant to abrasion and scratches. Particularly, the diameter of the optical fiber 152 is in a range of 150 µm to 250 µm.

In accordance with an embodiment of the present disclosure, the capstan 140 is disposed adjacent to the UV curing apparatus 138 and adapted to pull the bare optical fiber 118 from a bottom of the cylindrical glass preform 102 in the furnace chamber 104. In particular, the capstan 140 is a flexible belt partially wounded over a flat pulley that moves and/or pulls a continuous optical fiber (*i.e.,* the bare optical fiber 118) all the way from the cylindrical glass preform 102. Moreover, the capstan 140 can control a diameter of the optical fiber by adjusting a capstan speed. Further, a draw capstan design has a direct impact on the resulting fiber quality. Also, the capstan speed plays a significant role in controlling the BFD variation (specifically a long-term BFD variation).

The capstan speed is varied in a very short range to achieve a lower BFD variation. The BFD during the optical fiber draw process may vary in a different manner in different time periods. Specifically, the BFD may vary as a long-term variation. The long-term variation in the BFD is caused by frequent and higher variation in the feed speed. Thus, the long-term variation in the BFD is avoided by varying the feed speed by a small amount based on a measured diameter of the bare optical fiber 118 and a change in the capstan speed. The feed speed is varied by 0.3 mmpm based on the measured diameter of the bare optical fiber 118 and a change in the capstan speed. Preferably, the feed speed is varied in one or more steps such that each step is less than 0.3 mmpm. Specifically, the feed speed and the capstan speed is related as mass and/or volume of the cylindrical glass preform 102 being pulled by the capstan 140 in the form of the bare optical fiber 118 is conserved by a feed rate of the cylindrical glass preform 102. Thus, the mass and/or volume of the cylindrical glass preform 102 being pulled is equal to the mass and/or volume of the cylindrical glass preform 102 being fed inside the furnace chamber 104.

When the capstan speed is increased and/or decreased to control the BFD variation, subsequently the feed speed is increased and/or decreased to provide enough of the cylindrical glass preform 102 material inside the furnace chamber 104 to maintain a predefined diameter of the bare optical fiber 118 in range during further optical fiber draw process. Preferably the predefined diameter of the bare optical fiber 118 is less than or equal to 125+0.1.

In accordance with an embodiment of the present disclosure, the dancer pulley 142 is disposed adjacent to the capstan 140. In particular, the dancer pulley 142 is adapted to produce a desired winding tension of the optical fiber 152 on the take-up spool 144. Moreover, the dancer pulley 142 may have two pulleys (not shown), one behind the other on a common shaft (not shown). The optical fiber 152 is fed first to the rear pulley, then back up to the idler pulley, back down to the front dancer pulley and up to the take-up spool 144.

In accordance with an embodiment of the present disclosure, the diameter sensor 146 is configured to sense signals representing an outer diameter of the bare optical fiber 118 drawn from the cylindrical glass preform 102. In particular, the diameter sensor 146 is a single point sensor that can sense the diameter of the bare optical fiber 118 drawn from the cylindrical glass preform 102 when a centre of the bare optical fiber 118 drawn from the cylindrical glass preform 102 is known. Moreover, the controller 148 may communicate with different sensor such as a sensor to measure the capstan speed (not shown), the diameter sensor 146 of the bare optical fiber 118, and the feed speed. Further, the controller 148 may store a look-up table that includes multiple values of change in the feed speed corresponding to different values of change in the capstan speed (*i*.*e*., capstan slope value). Preferably, the capstan slope value is equal to zero in ideal condition. In other words, the diameter sensor 146 is communicatively coupled with the controller 148 such that the controller 148 upon receiving the sensed signals from the diameter sensor 146 may determine a numerical value of the diameter. Further, the controller 148 is communicatively coupled with the capstan 140 such that the controller 148 controls the capstan speed based on the determined diameter of the bare optical fiber 118.

In some aspects of the present disclosure, the controller 148 is , but are not limited to, an application-specific integrated circuit (ASIC) processor, a reduced instruction set computing (RISC) processor, a complex instruction set computing (CISC) processor, a field-programmable gate array (FPGA), a Programmable Logic Control unit (PLC), and the like. Aspects of the present disclosure are intended to include or otherwise cover any type of the controller 148 including known, related art, and/or later developed technologies known to a person of ordinary skill in the art, without deviating from the scope of the present disclosure.

In accordance with an embodiment of the present disclosure, the cylindrical glass preform 102 is hung at the first end 104a of the furnace chamber 104 and inserted inside the furnace chamber 104 at a predefined feed speed. Term "feed speed" as used herein refers to a rate at which the cylindrical glass preform 102 is fed downward into the furnace chamber 104. Specifically, the feed speed is determined using the below equation:

However, due to irregularities in a diameter of the cylindrical glass preform 102 all along an axial length, the feed speed is variable. In some aspects of the present disclosure, the diameter of the cylindrical glass preform 102 may vary from ±12 millimetres (mm) or more. Therefore, to have a continuous feed for same capstan speed, the feed speed is changed multiple times during the optical fiber draw method and/or process based on a change in the capstan speed and based on maximum possible fluctuation in the diameter of the cylindrical glass preform 102.

In accordance with an embodiment of the present disclosure, most of the time, the feed speed of the cylindrical glass preform 102 inside the furnace chamber 104 is either much more than what is required and much less than what is required which results in rapid change in the feed speed that may alter a mean value of diameter (generally, 125 micrometres (µm)) and may results in long-term variation in the mean diameter with time period greater than 10 seconds or more (not limited to this time). Therefore, to avoid these rapid changes in the feed speed, the feed speed is varied by a small amount or with small step values such that that the feed speed does not overshoot and/or undershoot the required mass of the cylindrical glass preform 102 inside the furnace chamber 104 and the mean diameter is maintained as near to 125 µm (preferably 125+0.1).

Further, the BFD variation of the bare optical fiber 118 is less than 0.1 micrometers (µm) (*i.e.,* less than +/-0.1 µm) from the mean diameter of the bare optical fiber 118. In some aspects of the present disclosure, the BFD of the bare optical fiber 118 is greater than 125 µm or less than 125 µm (for example 80 µm, 100 µm, 110 µm). In some aspects of the present disclosure, the mean diameter of the bare optical fiber 118 is in a range of 80 to 125 µm. In particular, the cylindrical glass preform 102 is inserted inside the furnace chamber 104 at a predefined feed speed. Moreover, the predefined feed speed may have a deviation of less than 0.3 mmpm (Millimetre Per Minute) from the mean value of the predefined feed speed for maintaining the mean diameter (*i.e.,* 125 µm (preferably 125+0.1)) of the bare optical fiber 118. Further, the deviation from the mean value of the predefined feed speed is less than 0.3 mmpm for maintaining the mean diameter of the bare optical fiber 118.

In accordance with an embodiment of the present disclosure, the cylindrical glass preform 102 is melted by way of the radiations provided by the induction coil 126 until glass from the cylindrical glass preform 102 flows under a low pulling tension. The capstan 140 (*i.e.,* a draw capstan) pulls the bare optical fiber 118 from the bottom of the cylindrical glass preform 102 in the furnace chamber 104, while the cylindrical glass preform 102 feed drive above the furnace chamber 104 maintains material flow equilibrium through the furnace chamber 104. The bare optical fiber 118 is further cooled (by way of the fiber cooling apparatus 134), coated in protective polymers (by way of the coating apparatus 136), cured under ultraviolet lights (by way of the UV curing apparatus 138), and wound onto the take-up spool 144.

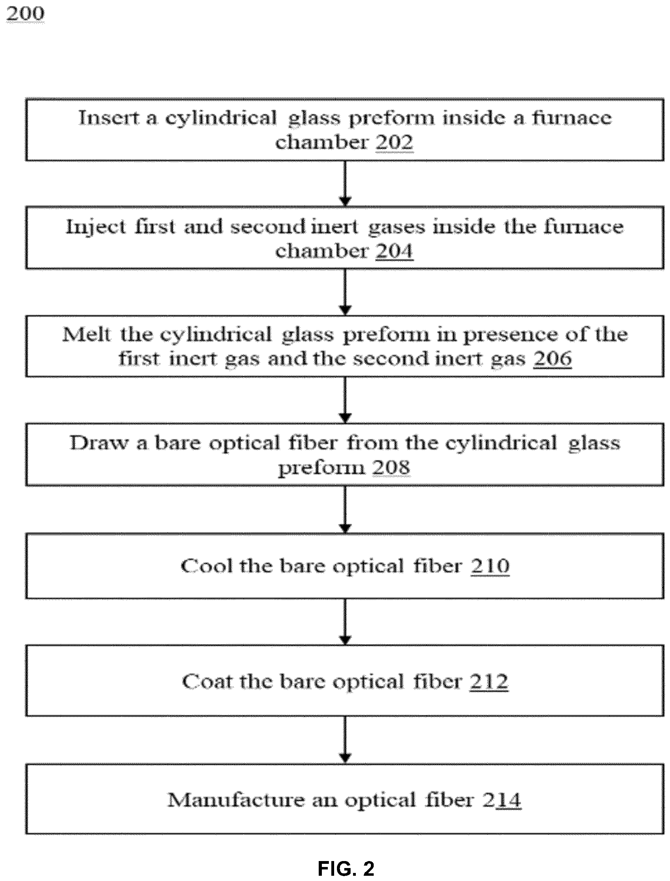

Fig. 2 is flowchart illustrating an optical fiber drawing process in presence of a first inert gas and a second inert gas in accordance with an embodiment of the present disclosure.The method 200 involves drawing the bare optical fiber 118 from a cylindrical glass preform 102 in a furnace chamber 104.

**At** step 202, the cylindrical glass preform 102 is inserted inside the furnace chamber 104 of the apparatus 100.

At step 204, the first inert gas and second inert gas (such as Helium (He) and Argon (Ar)) is injected inside the furnace chamber 104 of the apparatus 100.

At step 206, the cylindrical glass preform 102 is melted by way of the radiations provided by the induction coil 126 of the apparatus 100 until glass from the cylindrical glass preform 102 flows under a low pulling tension. Particularly, the cylindrical glass preform 102 is melted in the presence of a first inert gas and a second inert gas inside the furnace chamber 104 such that the first and second inert gases are in a predefined ratio. Moreover, the first inert gas is defined by a first atomic number (for example He), and the second inert gas is defined by a second atomic number (for example Ar). Further, the second atomic number is at least 5 times the first atomic number, and the predefined ratio of the volume of the first inert gas and the second inert gas is in a range of 0.3 to 5.

**At** step 208, the bare optical fiber 118 is drawn from the cylindrical glass preform 102 by way of the capstan 140 (*i.e.,* a draw capstan) that pulls the bare optical fiber 118 from the bottom of the cylindrical glass preform 102 in the furnace chamber 104.

At step 210, the bare optical fiber 118 is cooled in a cooling apparatus 134 to ensure that the Bare Fiber Diameter (BFD) variation of the bare optical fiber 118 is less than 0.1 µm from the mean diameter of the bare optical fiber 118.

At step 212, the bare optical fiber 118 is coated with one or more coating layers such as a primary coating layer and a secondary coating layer.

At step 214, an optical fiber 152 is manufactured using the above method such that the ratio of inert gases used during the melting process and the cooling process are effectively controlled to ensure that the bare optical fiber 118 has the desired diameter and minimal variation in the diameter. Particularly, the bare optical fiber 118 has a BFD with a tolerance of 0.1 microns.

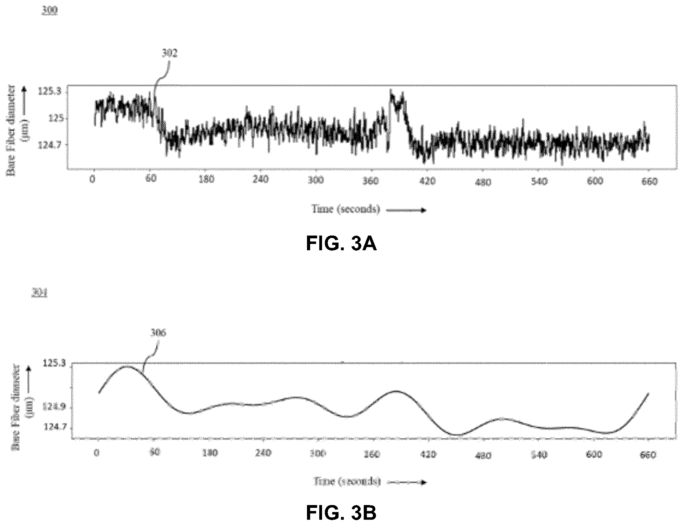

Fig. 3A is a graphical representation illustrating a short-term variation and a long-term variation of a Bare Fiber Diameter (BFD) of a bare optical fiber in accordance with an embodiment of the present disclosure.The graph 300 is a Bare Fiber Diameter (BFD) versus time graph such that an x-axis of the graph 300 represents values of time (in seconds), and a y-axis of the graph 300 represents values the BFD. Particularly, the graph 300 represent the short-term variation and the long-term variation of the BFD that is recorded for 11 minutes (*i.e.,* 660 seconds). The graph 300 has a curve 302 that represents a superimposition of the long-term variations of the BFD about the mean diameter of the bare optical fiber 118 and the short-term variations of the BFD about the mean diameter of the bare optical fiber 118 based on real time data of the BFD of the bare optical fiber 118. The graph 300 has a curve 302 that represents the superimposition of the long-term variations and the short-term variations of the BFD of the bare optical fiber 118 recorded for 11 minutes (*i.e.,* 660 seconds).

Fig. 3B is a graphical representation illustrating the long-term variation of the BFD of the bare optical fiber in accordance with an embodiment of the present disclosure. In particular, the graph 304 may represent the long-term variation (*i.e.,* greater than 10 seconds) of the BFD of the bare optical fiber 118 filtered out from the graph 300 of FIG. 3A. The graph 304 is a BFD versus time graph such that an x-axis of the graph 304 represents values of time (in seconds), and a y-axis of the graph 304 represents value of the BFD. Specifically, the graph 304 may represent the long-term variation of the BFD that is recorded for 11 minutes (*i.e.,* 660 seconds). As illustrated, the graph 304 has a curve 306 that represents the long-term variations of the BFD about the mean diameter of the bare optical fiber 118 based on real time data of the BFD of the bare optical fiber 118.

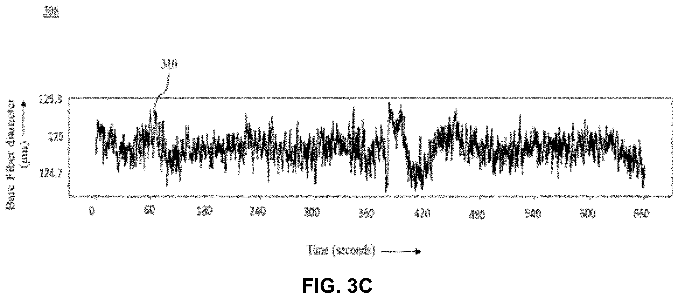

Fig.3C is a graphical representation illustrating the short-term variation of the BFD of the bare optical fiber in accordance with an embodiment of the present disclosure. The graph 308 may represent the short-term variation (*i.e.,* less than 10 seconds) of the BFD of the bare optical fiber 118 filtered out from the graph 300 of FIG. 3A. The graph 308 is a BFD versus time graph such that an x-axis of the graph 308 represents values of time (in seconds), and a y-axis of the graph 308 represents values the BFD. Specifically, the graph 308 may represent the short-term variation of the BFD that is recorded for 11 minutes (*i.e.,* 660 seconds). As illustrated, the graph 308 has a curve 310 that represents the short-term variations of the BFD about the mean diameter of the bare optical fiber 118 based on real time data of the BFD of the bare optical fiber 118.

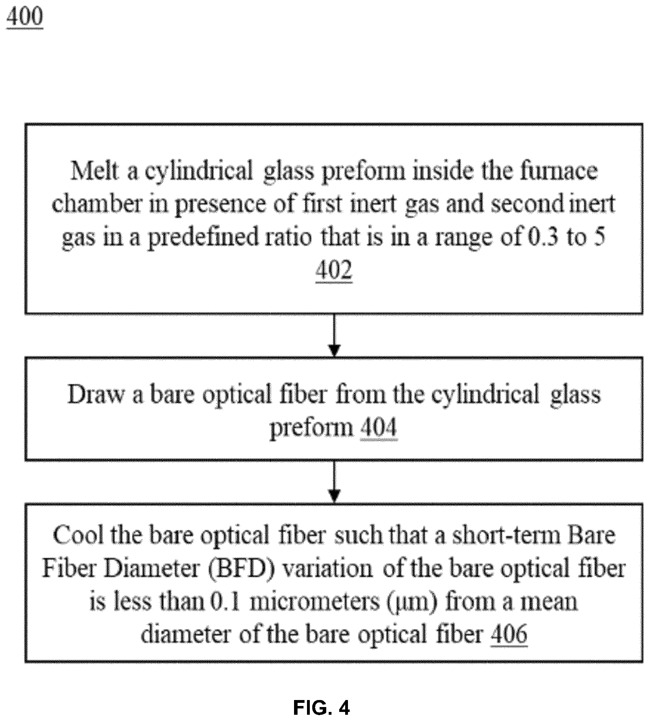

Fig. 4 is a flowchart illustrating a process of drawing a bare optical fiber during the short-term variation of the BFD in accordance with an embodiment of the present disclosure. At step 402, a cylindrical glass preform 102 is melted inside the furnace chamber 104 of the apparatus 100 in presence of the first inert gas (*e.g.,* He) and the second inert gas (*e.g.,* Ar). The first inert gas and the second inert gas is injected inside the furnace chamber 104 of the apparatus 100. The predefined ratio of the first inert gas and the second inert gas is maintained between 0.3 to 5 to avoid the short-term variation in the BFD of the bare optical fiber 118 and to avoid
(i) the turbulent flow of the first inert gas and the second inert gas and
(ii) formation of gases eddies near the neckdown region 102a of the cylindrical glass preform 102. The cylindrical glass preform 102 is melted by way of the radiations provided by the induction coil 126 of the apparatus 100 until glass from the cylindrical glass preform 102 flows under a low pulling tension.

At step 404, the bare optical fiber 118 is drawn from the cylindrical glass preform 102 by way of the capstan 140 (*i.e.,* a draw capstan) that pulls the bare optical fiber 118 from the bottom (*i.e.,* neckdown region 102a) of the cylindrical glass preform 102 in the furnace chamber 104.

At step 406, the bare optical fiber 118 is cooled in a fiber cooling apparatus 134. Specifically, the Bare Fiber Diameter (BFD) variation of the bare optical fiber 118 is less than 0.1 micrometers (µm) from the mean diameter of the bare optical fiber 118. The mean diameter of the bare optical fiber 118 is maintained at a predefined diameter. In some aspects of the present disclosure the predefined diameter is less than or equal to 125 µm (preferably 125+0.1).

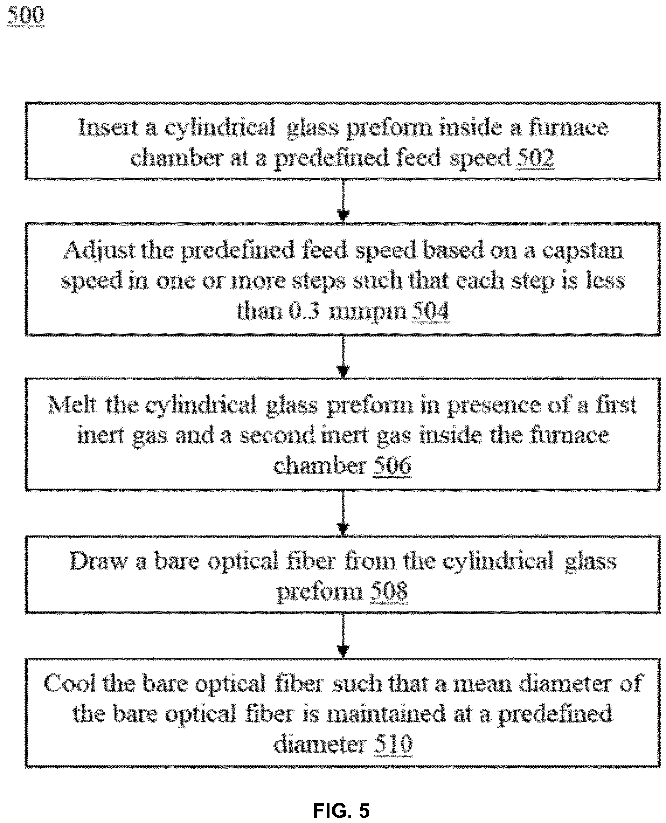

Fig. 5 is a flowchart illustrating a process of drawing a bare optical fiber during the long-term variation of the BFD in accordance with an embodiment of the present disclosure.

At step 502, the cylindrical glass preform 102 is inserted inside the furnace chamber 104 of the apparatus 100. The cylindrical glass preform 102 is inserted inside the furnace chamber 104 at a predefined feed speed. In particular, the predefined feed speed may have a deviation of is less than 0.3 mmpm (Millimetre Per Minute) from the mean value of the predefined feed speed (generally between 1 mmpm to 5 mmpm) for maintaining the mean diameter of the bare optical fiber 118 at a predefined diameter.

At step 504, the predefined feed speed is adjusted based on a capstan speed of the capstan 140 (*i.e.,* a draw capstan) in one or more steps such that each step is less than 0.3 mmpm.

At step 506, the cylindrical glass preform 102 is melted in presence of the first inert gas (*e.g.,* Helium (He)) and the second inert gas (*e.g.,* Argon (Ar)) inside the furnace chamber 104 of the apparatus 100. The predefined ratio of volume of the first inert gas and second inert gas is maintained between 0.3 to 5 to avoid the variation in the BFD of the bare optical fiber 118 and to avoid (i) the turbulent flow of the first inert gas and the second inert gas and (ii) formation of gases eddies near the neckdown region 102a of the cylindrical glass preform 102.

At step 508, the bare optical fiber 118 is drawn from the cylindrical glass preform 102 by way of the capstan 140 (*i.e.,* a draw capstan) that pulls the bare optical fiber 118 from the bottom (*i.e.,* neckdown region 102a) of the cylindrical glass preform 102 in the furnace chamber 104. the cylindrical glass preform 102 is melted by way of the radiations provided by the induction coil 126 of the apparatus 100 until glass from the cylindrical glass preform 102 flows under a low pulling tension.

At step 510, the bare optical fiber 118 is cooled in a fiber cooling apparatus 134. Specifically, the Bare Fiber Diameter (BFD) variation of the bare optical fiber 118 is less than 0.1 micrometers (µm) from a mean diameter of the bare optical fiber 118. The mean diameter of the bare optical fiber 118 is maintained at the predefined diameter. In some aspects of the present disclosure the predefined diameter is less than or equal to 125 µm (preferably 125+0.1).

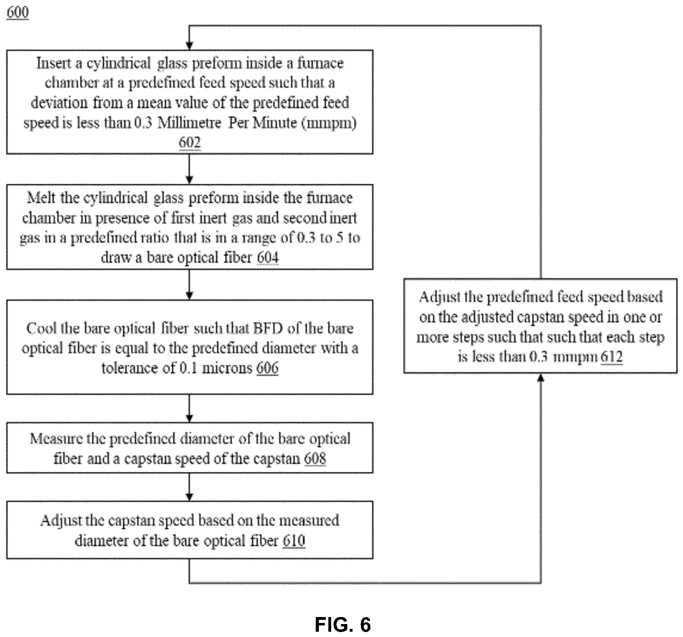

Fig. 6 is a flowchart illustrating a process of drawing the bare optical fiber during the short-term and long-term diameter variation of the BFD in accordance with another embodiment of the present disclosure.

At step 602, the cylindrical glass preform 102 is inserted inside the furnace chamber 104 of the apparatus 100. The cylindrical glass preform 102 is inserted inside the furnace chamber 104 at a predefined feed speed. In some aspects of the present disclosure, the predefined feed speed may have a deviation of less than 0.3 mmpm (Millimetre Per Minute) from the mean value of the predefined feed speed for maintaining the mean diameter of the bare optical fiber 118.

At step 604, the cylindrical glass preform 102 is melted by way of the radiations provided by the induction coil 126 of the apparatus 100 until glass from the cylindrical glass preform 102 flows under a low pulling tension. The cylindrical glass preform 102 is melted in presence of the first inert gas (such as He) and the second inert gas (such as Ar) inside the furnace chamber 104 of the apparatus 100 to draw the bare optical fiber 118. In particular, the predefined ratio of volume of the first inert gas and second inert gas is maintained between 0.3 to 5 to control the short-term variation in the BFD and to avoid (i) the turbulent flow of the first inert gas and the second inert gas and (ii) formation of gases eddies near the neckdown region 102a of the cylindrical glass preform 102.

At step 606, the bare optical fiber 118 is cooled in a fiber cooling apparatus 134. Specifically, the Bare Fiber Diameter (BFD) variation of the bare optical fiber 118 is less than 0.1 micrometers (µm) from the mean diameter of the bare optical fiber 118. The mean diameter of the bare optical fiber 118 is maintained at the predefined diameter. In some aspects of the present disclosure the predefined diameter is less than or equal to 125 µm (preferably 125+0.1).

At step 608, the diameter of the bare optical fiber 118 (*i*.*e*., the BFD) and the capstan speed of the capstan 140 is measured by way of the controller 148.

At step 610, the capstan speed is adjusted based on the measured diameter of the bare optical fiber 118 (*i.e.,* the BFD) by way of the controller 148.

At step 612, the predefined feed speed is adjusted by way of the controller 148 to a small amount based on the adjusted capstan speed. Specifically, the predefined feed speed is adjusted based on the adjusted capstan speed in one or more steps such that each step is less than 0.3 mmpm to control the long-term BFD variation of the bare optical fiber 118.

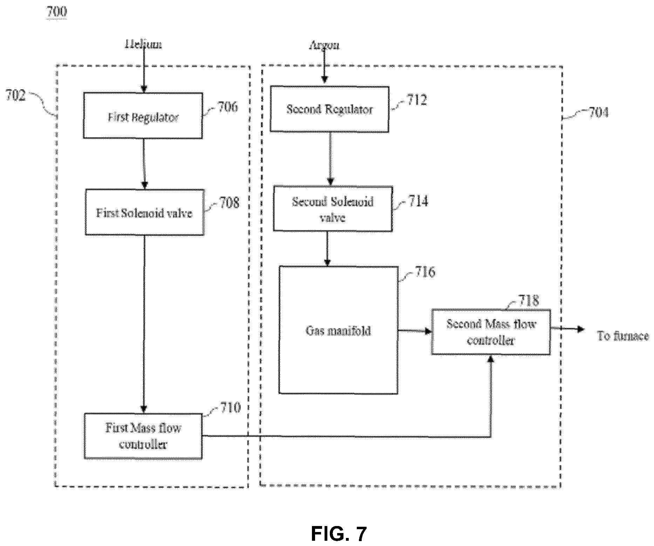

Fig. 7 is a gas flow diagram illustrating injection of the first and second inert gasses inside a furnace chamber of the apparatus in accordance with an embodiment of the present disclosure.The first and second inert gases (such as Helium (He) and Argon (Ar)) is injected inside the furnace chamber 104 by way of first and second gas injection apparatus 702 and 704, respectively. In particular, the first gas injection apparatus 702 may have a first regulator 706, a first solenoid valve 708, and a first mass flow controller 710. Similarly, the second gas injection apparatus 702 may have a second regulator 712, a second solenoid valve 714, a gas manifold 716, and a second mass flow controller 718. Moreover, the first inert gas and the second inert gas are injected inside the furnace chamber 104 via the inlet ports 124a-124n of the furnace chamber 104.

Thus, the apparatus 100, the system 130, and the method 200, 400, 500, 600 of the present disclosure facilitate in reducing the short-term and long-term BFD variation of the bare optical fiber 118. Further, the apparatus 100, the system 130, and the method 200, 400, 500, 600 of the present disclosure may facilitate in minimizing a fiber rejection due to the variations in the BFD.

Specifically, upon maintaining both the predefined ratio of volume of the first inert gas and the second inert gas in a range of 0.3 to 5, and the effective management and control of predefined speed, the variations in the BFD is controlled within ± 0.1 µm band which minimizes the fiber rejection due to the variations in the BFD. Further, the BFD variation of the bare optical fiber 118 with tighter tolerance *i.e.,* ± 0.1 µm band is essentially required for connectorization. Furthermore, upon effectively controlling the above discussed parameters such as the inert gases ratio and predefined feed speed may control sudden spikes in BFD during fiber draw process. And, the BFD variation of the bare optical fiber 118 with tighter tolerance *i.e.,* ± 0.1 µm band is required to control small angle scattering (SAS) at a core-cladding interface of the bare optical fiber 118, which occurs due to continuous axial variation in cladding diameter of the bare optical fiber 118.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A multi-core optical fiber (100) method (200, 400, 500, 600) for drawing a bare optical fiber (118) from a cylindrical glass preform (102) in a furnace chamber (104) **characterized in that** steps of:
melting the cylindrical glass preform (102) in presence of a first inert gas and a second inert gas inside the furnace chamber (104) to draw the bare optical fiber (118) such that the first inert gas and the second inert gas are in a predefined ratio,
wherein the first inert gas is defined by a first atomic number and the second inert gas is defined by a second atomic number,
wherein the second atomic number is at least 5 times the first atomic number, wherein the predefined ratio of volume of the first inert gas and the second inert gas is in a range of 0.3 to 5; and
cooling the bare optical fiber (118), wherein a short-term Bare Fiber Diameter (BFD) variation of the bare optical fiber (118) is less than 0.1 micrometers (µm) from a mean diameter of the bare optical fiber (118).

2. The method (200, 400, 500, 600) of claim 1, wherein the method further comprising inserting the cylindrical glass preform (102) in the furnace chamber (104) at a predefined feed speed, wherein a deviation from a mean value of the predefined feed speed is less than 0.3 Millimetre Per Minute (mmpm) for maintaining the mean diameter of the bare optical fiber (118) at a predefined diameter, whereby controlling a long-term diameter variation of the bare optical fiber (118).

3. The method (200, 400, 500, 600) of claim 1, wherein the method further comprising:
measuring the BFD of the bare optical fiber (118) and a capstan speed of a capstan (140) that pulls the bare optical fiber (118) from the cylindrical glass preform (102); and
adjusting the capstan speed based on the measured BFD.

4. The method (200, 400, 500, 600) of claim 2, wherein the method further comprises adjusting the predefined feed speed based on a capstan speed in one or more steps such that each step is less than 0.3 mmpm.

5. A method (200, 400, 500, 600) for drawing a bare optical fiber (118) from a cylindrical glass preform (102) in a furnace chamber (104), the method (200, 400, 500, 600) **characterized in that** steps of:
inserting the cylindrical glass preform (102) in the furnace chamber (104) at a predefined feed speed;
adjusting the predefined feed speed based on a capstan speed in one or more steps such that each step is less than 0.3 mmpm;
melting the cylindrical glass preform (102) in presence of a first inert gas and a second inert gas inside the furnace chamber (104) to draw the bare optical fiber (118); and
cooling the bare optical fiber (118), wherein a mean diameter of the bare optical fiber (118) is maintained at a predefined diameter.

6. The method (200, 400, 500, 600) of claim 5, wherein the first inert gas and the second inert gas are in a predefined ratio in a range of 0.3 to 5,

7. The method (200, 400, 500, 600) of claim 5, wherein a Bare Fiber Diameter (BFD) variation of the bare optical fiber (118) is less than 0.1 micrometers (µm) from a mean diameter of the bare optical fiber (118).

8. The method (200, 400, 500, 600) of claim 5 further comprising:
measuring the BFD of the bare optical fiber (118) and the capstan speed of a capstan (140) that pulls the bare optical fiber (118) from the cylindrical glass preform (102); and
adjusting the capstan speed based on the measured BFD.

9. The method (200, 400, 500, 600) of claim 5, wherein a deviation from a mean value of the predefined feed speed is less than 0.3 Millimetre Per Minute (mmpm).

10. An optical fiber (152) is manufactured using the method (200, 400, 500, 600) **characterized in that** the bare optical fiber (118) has a BFD of the predefined diameter with a tolerance of 0.1 microns.

11. The method (200, 400, 500, 600) as claimed in claim 10, wherein a constant total volume of the first inert gas and the second inert gas is maintained in the furnace chamber (104).

12. The method (200, 400, 500, 600) as claimed in claim 10, wherein the constant total volume of the first and second inert gases is less than 17 Standard litre per second per cubic metre.

13. The method (200, 400, 500, 600) as claimed in claim 10, wherein the constant total volume is sum of volume of the first inert gas and the second inert gas.

14. The method (200, 400, 500, 600) as claimed in claim 10, wherein the first atomic number is 2 and the second atomic number is 18.

15. The method (200, 400, 500, 600) as claimed in claim 10, wherein an attenuation of the optical fiber (152) is less than 0.324 Decibels (dB) at a wavelength of 1310 nanometres (nm).
